# EUROPEAN PATENT SPECIFICATION

(11) **EP 3 135 809 B1**
(45) Date of publication and mention of the grant of the patent: **31.10.2018**
(21) Application number: 16184641.5
(22) Date of filing: 18.08.2016
(51) Int. Cl.: D06N 3/00, D06N 3/14, C08J 9/26, C09D 175/04, C08J 5/18

(54) **POLYURETHANE SYNTHETIC LEATHER AND POLYURETHNE FILM COMPRISING SUCROSE AND METHOD FOR PREPARING THE SAME**
POLYURETHANKUNSTLEDER UND POLYURETHANFOLIE MIT SACCHAROSE UND VERFAHREN ZUR HERSTELLUNG DAVON
CUIR SYNTHÉTIQUE DE POLYURÉTHANE ET FILM POLYURÉTHANE COMPRENANT DU SUCROSE ET SON PROCÉDÉ DE PRÉPARATION

(30) Priority: 31.08.2015 KR 20150122766
(43) Date of publication of application: 01.03.2017
(73) Proprietor: Dongwoo Energy & Material Co., Ltd, Paengseong-eup, Pyeongtaek-si, Gyeonggi-do, 17998 (KR)
(72) Inventor: Park, Eun Seo, 32413 Chungcheongnam-do (KR); Kim, Jong Jin, 16657 Gyeonggi-do (KR); Min, Dong Jae, 35265 Daejeon (KR); Shin, Dong Woo, 17732 Gyeonggi-do (KR)
(74) Representative: HGF Limited

(56) References cited:
- GB-A- 2 031 901
- US-A- 3 772 059
- US-A- 3 846 156
- US-A- 4 242 464
- DATABASE WPI Week 198006 Thomson Scientific, London, GB; AN 1980-10192C XP002765910, & JP S54 162765 A (NANKAI GUM CO LTD) 24 December 1979 (1979-12-24)
- DATABASE WPI Week 201518 Thomson Scientific, London, GB; AN 2015-13492P XP002765911, -& KR 101 490 140 B1 (DONG WOO ALT CO LTD) 9 February 2015 (2015-02-09)

## Description

### [TECHNICAL FIELD]

This application claims priority from Korean Patent Application No. 10-2015-0122766 filed on August 31, 2015 with the Korean Intellectual Property Office.

The present invention relates to a method for preparing a polyurethane synthetic leather having uniform fine pores therein, by coagulating a polyurethane mixture solution prepared by including additives in a polyurethane resin composition, and then removing the additives in the coagulated polyurethane mixture solution.

### [BACKGROUND OF ART]

Polyurethane synthetic leather is an artificial leather which is produced by coating a polyurethane resin on a fabric substrate such as nonwoven fabric. Since such a polyurethane synthetic leather has excellent chemical and physical properties, particularly, excellent chemical resistance and softness, it has been widely applied to various fields.

In general, as the method for preparing a polyurethane synthetic leather, a dry method, a wet method, and a combined dry and wet method have been known. First, the dry method is a method for preparing a synthetic leather which includes coating a polyurethane for a dry coating on a release sheet, then heat-drying and curing the release sheet at a suitable temperature, coating a polyurethane adhesive on the cured release sheet, combining the coated sheet with a fabric, subjecting to heat-drying, adhering the cured polyurethane coating and a base fabric on the release sheet and then peeling off the release sheet. This dry method has an advantage that the preparing process is relatively simple, but there are problems such as a reduction in the surface property specific to the wet method, a lack of moisture permeability as well as a loss of voluminous feeling.

In contrast, the wet method is a method for preparing a synthetic leather which includes immersing several fabric substrates such as nonwoven fabric into a polyurethane resin solution, penetrating the polyurethane resin into the fabric substrates, coagulating the polyurethane resin in a coagulating tank, coating a polyurethane for wet grain-coating onto the coagulated immersed fabric in an appropriate amount, again coagulating the same in a coagulating tank, washing a residual solvent remaining in the fabric substrates and then subjecting to drying. This wet method has an advantage capable of overcoming the problems of the dry method, but there are difficulties in achieving the air permeability and softness.

In addition, the combined wet and dry method is a method for preparing a synthetic leather which includes using the polyurethane synthetic leather prepared by the wet method as a fabric substrate, and adhering to a fabric substrate a polyurethane for the dry coating prepared by the dry method. This method attempted to solve the problems of the dry method and the wet method, but there was a limitation in achieving high air permeability and softness.

In this regard, Korean Patent Registration No. 1,490,140 (published on January 30, 2015) in the name of the present applicant has suggested a method for preparing a polyurethane synthetic leather having fine pores therein which includes coating, onto a substrate, a polyurethane mixture solution obtained by mixing a polyurethane resin composition and polyvinyl alcohol, and coagulating the coated polyurethane mixture solution on the substrate and then removing polyvinyl alcohol present in the coagulated polyurethane mixture solution. However, there are problems that, when preparing a polyurethane synthetic leather using only polyvinyl alcohol, the shape of pores in the synthetic leather is unevenly formed and, after a sanding process, the surface of the polyurethane synthetic leather becomes rough.

Japanese patent application no. JPS54162765 to Nankai Gum Co Ltd. discloses a method for preparing a polyurethane synthetic leather prepared by mixing a polyurethane resin and a sugar alcohol (e.g. mannitol or sorbitol).

US patent no. 4,242,464 to David Boutle discloses an improved microporous material made by coagulating a polymer solution containing dispersed microscopic particles of a removeable filler soluble in coagulating liquid.

UK patent no. 2031901 to Porvair Ltd discloses a battery separator of microporous unplasticized polyvinyl chloride.

US patent no. 3,772,059 to Shikada discloses a method for producing a microporous sheet material having excellent abrasion resistance and moisture-permeability useful for artificial leathers wherein numerous bead-like linked spherical micropores are arranged contiguously at barrier intervals in the interior of the microporous layer is proposed.

US patent no. 3,846,156 to Seibert et al. discloses a process for producing a soft, drapable artificial leather made of polyurethane.

### [Prior Art Document]

Patent Document 1: Korean Patent Registration No. 1,490,140 (published on January 30, 2015)

### [DETAILED DESCRIPTION OF THE INVENTION]

### [Technical Problem]

For resolving the aforesaid problems of the prior arts, the present invention provides a method for preparing a polyurethane synthetic leather having a smooth surface after a sanding process, by forming uniform fine pores in the polyurethane synthetic leather using a polyurethane mixture solution prepared by adding an additive containing sucrose (C₁₂H₂₂O₁₁) and a polyurethane resin composition during the preparation of the polyurethane synthetic leather.

### [Technical Solution]

To achieve the above-described object, the present invention provides a method for preparing a polyurethane film having uniform fine pores which includes: a mixture solution preparing step of preparing a polyurethane mixture solution by mixing a polyurethane resin composition and an additive containing sucrose (C₁₂H₂₂O₁₁), a de-foaming step of removing bubbles by stirring the polyurethane mixture solution, a coating step of coating, onto a substrate, the polyurethane mixture solution in which the bubbles have been removed, a coagulating step of coagulating the polyurethane mixture solution coated onto the substrate, a washing step of removing the additive in the coagulated polyurethane mixture solution, and a drying step of drying the polyurethane mixture solution in which the additive has been removed.

In this case, in the mixture solution preparing step, the polyurethane resin composition includes 100 parts by weight of a polyurethane resin, 1 to 6 parts by weight of a surfactant, 30 to 70 parts by weight of an organic solvent and 3 to 10 parts by weight of a pigment, wherein the polyurethane mixture solution includes 1 to 2,000 parts by weight of sucrose (C₁₂H₂₂O₁₁) based on 100 parts by weight of the polyurethane resin. The cross section of the polyurethane film includes 30 to 50 pores having a diameter of 10.00 µm to 40.00 µm per 0.1 mm². The polyurethane film comprises 0.01 to 2 parts by weight of sucrose based on 100 parts by weight of the polyurethane film and the polyurethane film has an apparent density of 125 kg/m³ to 220 kg/m³.

In addition, in the mixture solution preparing step, the additive may further include polyvinyl alcohol, and the content ratio of sucrose and polyvinyl alcohol is preferably 100:1∼10.

In the coagulating step, the polyurethane mixture solution is coagulated by immersing in a coagulating solution containing 0.1% to 30% by weight, preferably 15% to 25% by weight, and more preferably 20% to 24% by weight of an organic solvent, and the temperature of the coagulating solution may be 30°C to 70°C. In the washing step, the substrate coated with the coagulated polyurethane mixture solution can be immersed in water of a temperature of 50°C to 100°C to remove residual organic solvent and additive.

Further, the present invention provides a polyurethane film prepared by the above-described method,.

### [ADVANTAGEOUS EFFECTS]

The present invention relates to a method for preparing a polyurethane film having uniform fine pores, and since the polyurethane film is prepared by using a polyurethane mixture solution obtained by mixing a polyurethane resin composition and an additive, it can not only form a smooth surface after a sanding process but also improve an air permeability and a softness due to fine pores formed in the polyurethane film.

In addition, the size and density of the fine pores can be optionally adjusted by adjusting the content of the additive, and the present invention can provide various types of films depending on the product use.

### [BRIEF DESCRIPTION OF DRAWINGS]

FIG. 1 is a flow chart illustrating a method for preparing a polyurethane synthetic leather or film according to an embodiment of the present invention.
FIG. 2 is a process diagram schematically illustrating the steps of coating, coagulating and washing according to an embodiment of the present invention.
FIG. 3 is a photograph of a cross section of a polyurethane film according to an embodiment of the present invention,
FIG. 4 is a photograph showing the size of the respective pores in the photograph of FIG. 3.

### [DETAILED DESCRIPTION OF THE EMBODIMENTS]

Hereinafter, the present invention will be described by way of preferred embodiments. Prior to the description, however, it should be understood that the terms or words used in the specification and the appended claims should not be construed as limited to general and dictionary meanings, but interpreted based on the meanings and concepts corresponding to technical aspects of the present invention.

Unless explicitly stated otherwise, terms "comprise," "comprises" or "comprising" as used herein will not be understood as the exclusion of the other elements but refer to further including the other elements.

The method for preparing a polyurethane filmhaving uniform fine pores according to the present invention, and the polyurethane film prepared therefrom will now be described in detail with reference to the accompanying drawings.

Specifically, an example where an anhydrous sodium sulfate and/or sucrose (C₁₂H₂₂O₁₁) is contained as an additive during the preparation of the polyurethane filmwill be described.

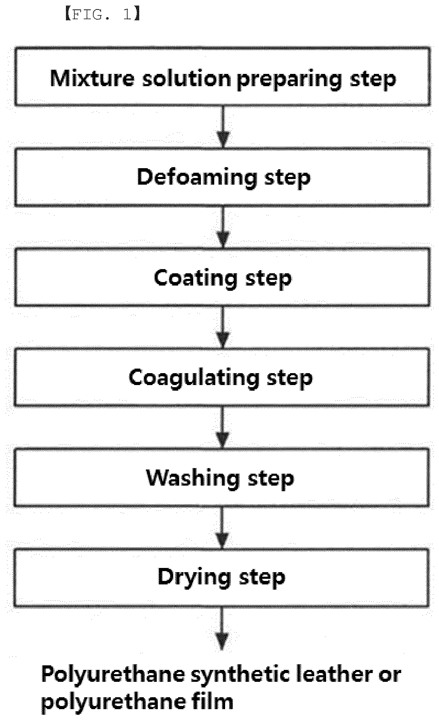

First, FIG. 1 is a flow chart illustrating a method for preparing a polyurethane filmhaving uniform fine pores according to an embodiment of the present invention. The method for preparing a polyurethane film having uniform fine pores includes preferably a mixture solution preparing step of preparing a polyurethane mixture solution by mixing a polyurethane resin composition and an additive containing anhydrous sodium sulfate, a de-foaming step of removing bubbles by stirring the polyurethane mixture solution, a coating step of coating, onto a substrate, the polyurethane mixture solution in which the bubbles have been removed, a coagulating step of coagulating the polyurethane mixture solution coated onto the substrate, a washing step of removing the additive in the coagulated polyurethane mixture solution, and a drying step of drying the polyurethane mixture solution in which the additive has been removed.

The preparation method according to an embodiment of the present invention will now be described in detail step by step.

The mixture solution preparing step is a step of preparing a polyurethane mixture solution by mixing an additive containing anhydrous sodium sulfate in a polyurethane resin composition in order to form bubbles in the polyurethane resin composition. The polyurethane resin composition includes 100 parts by weight of a polyurethane resin, 1 to 6 parts by weight of a surfactant, 30 to 70 parts by weight of an organic solvent and 3 to 10 parts by weight of a pigment, wherein the polyurethane mixture solution includes 1 to 100 parts by weight of an anhydrous sodium sulfate based on 100 parts by weight of the polyurethane resin.

The surfactant functions so that an additive is uniformly dispersed in a urethane resin composition. The surfactant also serves to form high-quality fine pores in a subsequent washing step and concurrently to efficiently remove an organic solvent and additive from the polyurethane mixture solution in the coagulating step.

The surfactant may include an auxiliary agent for forming cells that assists in the formation of cells, and an additive (e.g., de-DMF additive) that assists in the removal of an organic solvent. When the content of the surfactant is too high or low compared to the above content range, it may function as an obstacle factor in the formation of cell in a coagulation step and cause a degradation in the quality of the polyurethane film.

On the other hand, the organic solvent may use various organic solvents, but it is preferable to use the organic solvent which can be easily removed in the course of coagulating the polyurethane mixture and also increase the coagulation speed. In one example, DMF may be used. When the content of the organic solvent exceeds 70 parts by weight, the coagulation time of the polyurethane mixture solution is longer or the washing time to remove polyvinyl alcohol, anhydrous sodium sulfate and organic solvent in the coagulated polyurethane mixture solution may be excessively longer. When the content of the organic solvent is less than 30 parts by weight, polyvinyl alcohol in the polyurethane mixture solution is not sufficiently dispersed and uniform fine pores cannot be obtained during the preparation of polyurethane film. In addition, an air permeability and a softness may be lowered.

In this case, a part of the organic solvent is used in the preparation of the polyurethane resin composition and the remainder can be used for dilution of the additive. The ratio is preferably 1:1, but is not limited thereto.

The pigment contained in the polyurethane resin composition serves to impart the color of polyurethane film, and any pigment can be used without limitation as long as it is a material usable as a pigment. The pigment is contained preferably in an amount of 3 to 10 parts by weight based on 100 parts by weight of the polyurethane resin composition, so that sufficient coloring can be made without affecting the functions of other constituents contained in the polyurethane mixture solution.

On the other hand, the additive to be added to the polyurethane resin composition serves to form pores, and previously, it was common to use polyvinyl alcohol as the additive. However, polyvinyl alcohol exhibits a property of absorbing DMF which is an organic solvent, and an effect of being inflated by the temperature rise, and thus has an advantage of maintaining its ability to thicken in the coagulation step. However, polyvinyl alcohol not only increases the size of pores but also starts to be dissolved in the coagulating and washing step. Due to the slippery properties of polyvinyl alcohol, an obstacle occurs in the work process, and during the preparation of the film, the distribution of pores is not uniform and the surface is rough.

Thus, in a reference example, in order to form fine pores which are uniform and stable inside the polyurethane, the polyurethane resin composition is mixed with an additive containing anhydrous sodium sulfate. As the additive, the anhydrous sodium sulfate may be used alone, or other materials such as polyvinyl alcohol may be used in combination with the anhydrous sodium sulfate.

When the anhydrous sodium sulfate is used alone as the additive, the anhydrous sodium sulfate is preferably contained in an amount of at least 30 parts by weight or more based on 100 parts by weight of the polyurethane resin. When the anhydrous sodium sulfate is contained in an amount of less than 30 parts by weight, the softness of the polyurethane filmcan be lowered, and in the coagulation step, a vertical cell specific to the polyurethane resin can be formed, thereby preventing the formation of the cell with a desired structure (circular or elliptical, etc.) on the surface layer of the substrate. Consequently, the problem of the air permeability of the prepared polyurethane filmdecreasing may occur.

When further including polyvinyl alcohol in addition to anhydrous sodium sulfate as the additive, the content ratio of anhydrous sodium sulfate and polyvinyl alcohol may be preferably 100: 1-10, and more preferably 100:5. When the anhydrous sodium sulfate and the polyvinyl alcohol are mixed and used in such a content ratio, it is possible to obtain small and uniform pores while maintaining the softness and air permeability.

Closely looking at the mixture solution preparing step, in order to minimize the flocculation phenomenon, a polyurethane mixture solution is prepared by first including a polyurethane resin, an auxiliary agent for forming cells, a de-DMF additive and a pigment in the organic solvent DMF to prepare a polyurethane resin composition and then adding polyvinyl alcohol and/or anhydrous sodium sulfate diluted with DMF to the polyurethane resin composition.

The polyvinyl alcohol and/or anhydrous sodium sulfate is preferable to use a powder containing 95 wt% particle size of 1-120*µ*m filtered through 120 mesh net. When the particle size of the polyvinyl alcohol and anhydrous sodium sulfate is too large or small compared to the above range, it can be an obstacle factor in the formation of cells in a coagulation step or affect the size of pores, thereby causing a degradation in the quality of the polyurethane film.

Meanwhile, in an embodiment of the invention, as an additive which is mixed in the polyurethane resin composition, an additive including sucrose (sugar powder, C₁₂H₂₂O₁₁) instead of anhydrous sodium sulfate can be used. As the above additive, sucrose (sugar powder, C₁₂H₂₂O₁₁) may be used alone, or a mixture of sucrose (sugar powder, C₁₂H₂₂O₁₁) and other materials such as polyvinyl alcohol and/or anhydrous sodium sulfate may be used.

In this case, by controlling the content of the respective components which constitute the additive, that is, sucrose, anhydrous sodium sulfate, polyvinyl alcohol and the like, the air permeability and softness of the polyurethane film can be adjusted.

Sucrose can be contained in an amount of 1 to 2000 parts by weight based on 100 parts by weight of the polyurethane resin, and it is preferable to use a powder containing 95 wt% or more particle size of 1-120*µ*m filtered through 120 mesh net.

When sucrose and anhydrous sodium sulfate and/or polyvinyl alcohol are used together, the anhydrous sodium sulfate and/or polyvinyl alcohol can be mixed in amount of 1 to 100 parts by weight based on 100 parts by weight of the polyurethane resin.

On the other hand, in order to minimize that the surface of the film becomes rough during the formation of pores, the polyurethane mixture solution may further include 1 to 10 parts by weight of a surface smoothing agent, if necessary. As the surface smoothing agent, various materials which can improve the smoothness of the surface of the film can be used, and in a preferred example, a pulp can be used.

When the mixing step is complete, a stirring process is preferably performed so that the constituent materials in the prepared polyurethane mixture solution can be uniformly distributed.

In order to optimize the coagulation rate and formability of the resulting polyurethane mixture solution, and also to improve the quality by forming uniform fine pores in the polyurethane film, a de-foaming step of removing bubbles in the polyurethane mixture solution while maintaining the stirring can be performed.

The polyurethane mixture solution which has passed through the de-foaming step is subjected to a coating step of coating onto a substrate. As the substrate, substrates made of various materials such as a woven fabric, a nonwoven fabric, ultrafine fiber nonwoven fabric and the like can be used. In the case of producing a film, special textile fabrics such as Oxford paper, nylon taffeta, etc. can be used.

In this regard, a retted substrate and/or a non-retted substrate can be used, as needed. Due to a very low viscosity of the formulated solution, it is likely to excessively penetrate into the substrate when coating. In this case, the substrate is preferably immersed in a hydrophilic solvent such as water to subject to retting treatment so that the moisture content becomes 10% to 20% by weight.

When the moisture content of the retted substrate is less than 10% by weight, the polyurethane mixture solution is excessively penetrated into the substrate and a subsequent peeling may be difficult. When the moisture content exceeds 20% by weight, the polyurethane mixture solution is coagulated before being fully penetrated into the substrate and a phenomenon where it is separated during the preparation process can occur.

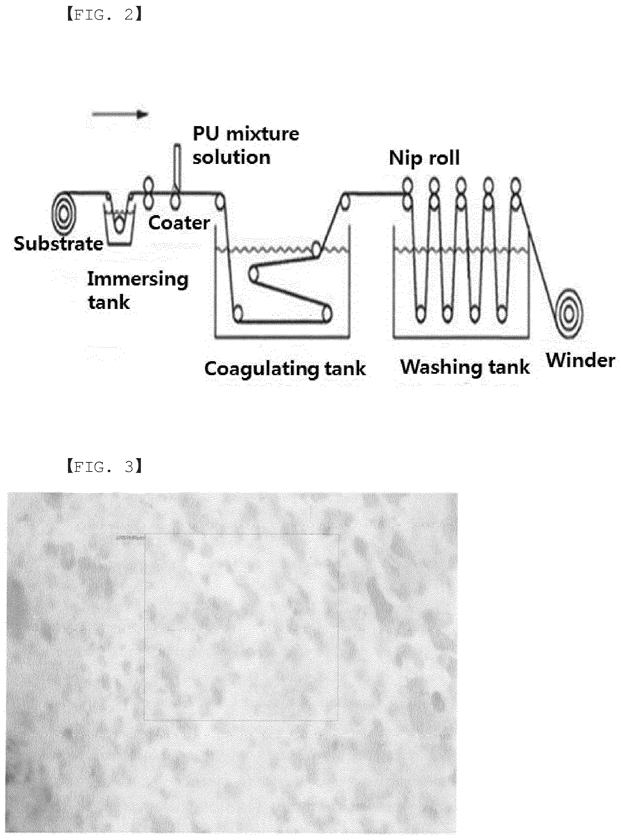

The polyurethane mixture solution can be coated onto the substrate in a variety of ways, but the solution is preferably coated onto the substrate with a thickness of 0.1 mm to 10 mm by a knife over roll coating method as shown in FIG. 2. It can be controlled depending on the use of the polyurethane film to be prepared.

The polyurethane mixture solution coated on the substrate goes through a coagulation step as shown in FIG. 2, and the coagulation is preferably performed at a temperature of 30°C to 70°C using, as a coagulation solution, water containing 0.1% to 30% by weight, particularly 15% to 25% by weight, more particularly 20% to 24% by weight of an organic solvent. The organic solvent usable here may be preferably the same as that used in the preparation of the polyurethane mixture solution. As an example, DMF can be used.

The organic solvent contained in the coagulation solution serves to discharge the organic solvent contained in the polyurethane mixture solution to the outside, which may be a factor determining the coagulation rate and level of the total polyurethane mixture solution.

Therefore, when the content of the organic solvent exceeds or falls below the above range, a proper removal of the organic solvent is not made and the overall coagulation rate may be slower. Consequently, the formation of uniform fine pores may be difficult.

On the other hand, when the coagulation is performed, it is important to control the temperature of the coagulation liquid so as to maintain at 30°C to 70°C. When the temperature of the coagulation solution exceeds 70°C, the pores inside the polyurethane mixture solution are formed in very large or irregular shapes, while the additive in the polyurethane mixture solution starts to be rapidly dissolved. When the temperature of the coagulation liquid is less than 30°C, the coagulation rate may be significantly slower.

The coagulated polyurethane mixture solution goes through a subsequent washing step of removing an additive. In the washing step, the residual organic solvent can be removed and concurrently the additive in the polyurethane mixture solution can be removed. When the additive remains in the polyurethane mixture solution, the surface of the prepared polyurethane synthetic leather or film exhibits a slippery feeling. Therefore, in this case, the washing step is preferably repeated until the slippery feeling is removed from the surface of the film.

In order to completely remove the additive present in the polyurethane synthetic leather or film, a lot of time and cost are required. Therefore, by allowing a certain amount of additives to remain in the synthetic leather or film, the process efficiency can be improved. Preferably, the polyurethane synthetic leather or film may comprise 0.01 to 2 parts by weight of additives based on 100 parts by weight of the polyurethane resin composition.

It has been found in the present invention that, in the case of repeating the washing in order to remove the additive present in the polyurethane synthetic leather or film to be less than the above range, there are problems that the surface of the polyurethane synthetic leather or film is damaged and the sense of touch and the tear strength are reduced.

In particular, among the above additives, sucrose is a material harmless to the human body and does not exert an adverse effect, such as irritating to human skin, even if a part thereof remains in the synthetic leather or film. Therefore, sucrose can be more preferably used as an additive of the synthetic leather or film having high possibility of coming into contact with human skin.

At this time, the washing step may be performed by immersing a substrate coated with the polyurethane mixture in a washing tank containing water of 50°C to 100°C as shown in FIG. 2. Here, when the temperature of the washing tank is less than 50°C, it may be difficult to make a sufficient removal of polyvinyl alcohol and anhydrous sodium sulfate.

The substrate on which the polyurethane mixture solution through the washing step has been coated is used as a film after subjecting to a post-processing step or the like or it may be used as a polyurethane film by separating and removing only a substrate from the polyurethane film.

On the other hand, the substrate on which the polyurethane mixture solution through the washing step has been coated is finally subjected to a drying step. As an example, the moisture of the substrate on which the coagulated polyurethane mixture has been coated may be removed at a rate of 6 to 10 m/min at 100°C to 130°C. In this case, when the drying temperature exceeds the above temperature range, a deformation of the polyurethane or pigment may occur.

In one specific embodiment, the polyurethane film having fine pores according to one embodiment of the present invention may include 0.01 to 2 parts by weight of sucrose based on 100 parts by weight of the polyurethane resin composition.

In particular, the sucrose can be contained in an amount of 0.01 to 1 part by weight.

In addition, the polyurethane film may include other additives such as polyvinyl alcohol and/or anhydrous sodium sulfate in addition to sucrose.

In the following, the method for preparing the polyurethane synthetic leather or film of the present invention is described by way of examples. However, the scope of the invention is not limited to these preferred examples, and it will be apparent to those skilled in the art that several variations or modifications may be made to the contents described herein, which are within the scope of the present invention.

### [Preparation Example 1]

### Preparation of polyurethane mixture

100 parts by weight of a polyurethane resin containing a solid content of 30wt%-40wt% (ISW-516W, ILSAM Chemical), 4 parts by weight of a softness improving agent (LS-640F, LSTM) as an auxiliary agent for forming cells, 1 part by weight of a buffing improving agent (LS-D530N, LSTM), 0.4 part by weight of a de-DMF agent (LS-050, LSTM), and 7.5 parts by weight of a pigment (ILSAM Chemical, SAMBO Fine Chemicals, and DAEBO Paint) were introduced into 25 parts by weight of DMF (purified DMF) to prepare a polyurethane resin composition.

30 parts by weight of polyvinyl alcohol (P-05S: Dong Yang Ever Chem) was introduced and diluted into 45 parts by weight of DMF and then mixed with the polyurethane resin composition to prepare a polyurethane mixture of Comparative Example 1.

100 parts by weight of anhydrous sodium sulfate (Duksan Pure Chemicals) was introduced and diluted into 25 parts by weight of DMF and then mixed with the polyurethane resin composition to prepare a polyurethane mixture of Reference Example 1.

5 parts by weight of polyvinyl alcohol (P-05S: Dong Yang Ever Chem) and 100 parts by weight of anhydrous sodium sulfate (Duksan Pure Chemicals) were introduced and diluted into 25 parts by weight of DMF and then mixed with the polyurethane resin composition to prepare a polyurethane mixture of Reference Example 2.

100 parts by weight of anhydrous sodium sulfate (Duksan Pure Chemicals) and 100 parts by weight of sucrose powder were introduced and diluted into 25 parts by weight of DMF and then mixed with the polyurethane resin composition to prepare a polyurethane mixture of Example 1.

200 parts by weight of sucrose powder was introduced and diluted into 25 parts by weight of DMF and then mixed with the polyurethane resin composition to prepare a polyurethane mixture of Example 2.

The polyurethane mixtures of Comparative Example 1, Reference Examples 1 and 2 and Examples 1 and 2 were stirred at 50°C and then de-foamed for about 2 hours.

### [Preparation Example 2]

### Preparation of polyurethane synthetic leather

Using Oxford paper as a substrate, the polyurethane mixtures of Comparative Example 1, Reference Examples 1 and 2 and Examples 1 and 2 were coated on the substrate with a thickness of 3.5 mm through a knife over-roll coating device.

The substrates coated with the polyurethane mixtures of Comparative Example 1, Reference Examples 1 and 2 and Examples 1 and 2 were subjected to a coagulating step in a coagulation tank of the temperature of 55°C containing 20 wt% to 24 wt% of DMF and immersed in a washing tank of the temperature of 70°C to remove residual organic solvent, polyvinyl alcohol, anhydrous sodium sulfate and sucrose.

The substrates coated with the polyurethane mixtures of Comparative Example 1, Reference Examples 1 and 2 and Examples 1 and 2, which have passed through the washing tank, were dried at a rate of 7 m/min at a temperature of 120°C to prepare the polyurethane synthetic leathers of Comparative Example 1, Reference Examples 1 and 2 and Examples 1 and 2.

Looking at the prepared polyurethane synthetic leathers of Comparative Example 1, Reference Examples 1 and 2 and Examples 1 and 2, the polyurethane synthetic leather of Comparative Example 1 showed that the shape of pores in the synthetic leather was formed non-uniformly and, after a sanding work, the surface became rough. The polyurethane synthetic leathers of Reference Examples 1 and 2 and Examples 1 and 2 showed that the shape of pores was formed finely and uniformly and, after a sanding work, the surface of the polyurethane synthetic leathers became smooth.

Accordingly, polyurethane synthetic leathers of Reference Examples 1 and 2 and Examples 1 and 2 exhibited excellent air permeability and softness because fine pores in the synthetic leather was formed uniformly, and thus could be used for various purposes in a variety of applications.

### [Preparation Example 3]

### Preparation of polyurethane film

The substrate was peeled off from the polyurethane synthetic leather passed through the washing tank in Preparation Example 2 and then dried to produce a polyurethane film. Since the polyurethane film thus produced had excellent air permeability and softness, it could be used for various purposes in various fields.

Among the polyurethane films of Reference Examples 1 and 2 and Examples 1 and 2, particularly, the polyurethane film of Example 2 using sucrose as the additive exhibited very excellent quality.

The content of sucrose in the polyurethane film of Example 2 was measured using a high performance liquid chromatograph-evaporative light-scattering detector (HPLC-ELSD). The results showed that about 0.9 wt% of sucrose was contained based on the total weight of the polyurethane film. The polyurethane film including a certain amount of sucrose harmless to the human body had less skin irritation upon contact with skin, the sense of touch was excellent and the tear strength could be improved.

The weight and thickness of the sample in which the polyurethane film of Example 2 was cut into a size of 100 mm in width and 100 mm in length were measured to calculate an apparent density. As a result, the apparent density was measured to be 125 kg/m³ to 220 kg/m³. The apparent density of the polyurethane film can be seen as an important criterium for determining the ratio of the volume occupied by pores compared to the entire film. Considering that the apparent density of a typical wet polyurethane film is about 400 kg/m³, it could be seen that the polyurethane film of Example 2 had a high ratio of the volume occupied by pores and exhibited excellent softness and air permeability.

The cross section of a polyurethane film of Example 2 was observed. As a result, it could be confirmed that the pore sizes of the cross section were uniformly formed, including 30 to 50, particularly 35 to 45, more particularly 38 to 43 pores having a diameter of 10.00 *µ*m to 40.00 *µ*m per 0.1mm². It could be confirmed that as the film had pores of uniform size, the softness and the sense of touch were more improved.

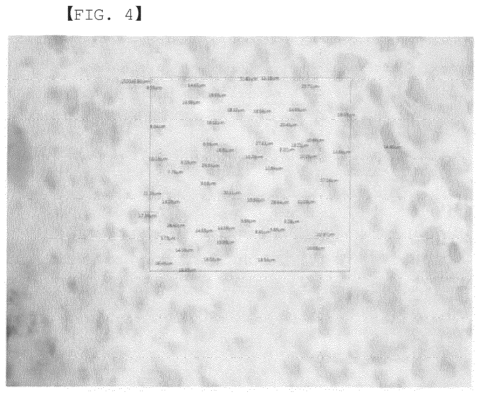

FIG. 3 and FIG. 4 are photographs of cross-section of the polyurethane film according to Example 2. Referring to FIG. 3 and FIG. 4, it is displayed as 0.1mm², area of the polyurethane film, and in particular, FIG. 4 illustrates the sizes of the respective pores present in the above area, respectively.

The tear strength of the polyurethane film of Example 2 was measured using a measuring instrument (LRX-5K, LLOYD Ltd.). The polyurethane film sample was cut into a size of 150 mm in width, 75 mm in length and 1.1 mm in thickness, and the mid-point of the end of one side of the sample was cut a little in a width direction, which was equipped with a clamp of the measuring instrument. While moving the clamp at a rate of 300 mm/min, the force acting during the tearing occurred until a 75 mm point of the sample in a width direction was observed. As a result of the measurement, it could be confirmed that the polyurethane film of Example 2 had excellent tear strength of 0.3N to 3.0N.

The tensile force and elongation of the polyurethane film of Example 2 were measured using a measuring instrument (LRX-5K, LLOYD Ltd.). The polyurethane film sample was cut into a size of 150 mm in width, 2.54 mm in length and 1.1 mm in thickness, and then equipped with a clamp of the measuring instrument. While moving the clamp at a rate of 300 mm/min, the force and length when cutting the sample were measured and the tensile force and elongation were measured. As a result of the measurement, it could be confirmed that the polyurethane film of Example 2 had excellent tensile force of 150 N/cm² to 700 N/cm². Further, it could be confirmed that the polyurethane film of Example 2 had an elongation of 220% to 550%.

## Claims

1. A method for preparing a polyurethane film having uniform fine pores, comprising:
preparing a polyurethane mixture solution by mixing a polyurethane resin composition and an additive containing sucrose (C₁₂H₂₂O₁₁);
removing bubbles by stirring the polyurethane mixture solution;
coating, onto a substrate, the polyurethane mixture solution with the bubbles removed therefrom;
coagulating the polyurethane mixture solution coated onto the substrate;
removing the additive in the coagulated polyurethane mixture solution; and
drying the coagulated polyurethane mixture solution with the additive removed therefrom,
wherein the polyurethane mixture solution includes 1 to 2,000 parts by weight of sucrose (C₁₂H₂₂O₁₁) based on 100 parts by weight of the polyurethane resin,
the cross section of the polyurethane film includes 30 to 50 pores having a diameter of 10.00 *µ*m to 40.00 *µ*m per 0.1mm²,
the polyurethane film comprises 0.01 to 2 parts by weight of sucrose based on 100 parts by weight of thea polyurethane film, and
the polyurethane film has an apparent density of 125 kg/m³ to 220 kg/m³.

2. The method for preparing a polyurethane film having uniform fine pores according to claim 1, wherein, in preparing the polyurethane mixture solution,
the additive further includes anhydrous sodium sulfate and/or polyvinyl alcohol, and
the anhydrous sodium sulfate and/or polyvinyl alcohol is mixed in amount of 1 to 100 parts by weight based on 100 parts by weight of the polyurethane resin.

3. The method for preparing a polyurethane film having uniform fine pores according to claim 1, wherein, in coagulating the polyurethane mixture solution,
the polyurethane mixture solution is coagulated by being immersed in a coagulating solution containing 0.1% to 30% by weight of an organic solvent, and the temperature of the coagulating solution is 30°C to 70°C.

4. The method for preparing a polyurethane film having uniform fine pores according to claim 1, wherein, in removing the additive, the substrate coated with the coagulated polyurethane mixture solution is immersed in a water of a temperature of 50°C to 100°C to remove residual organic solvent and additive.

5. A polyurethane film having uniform fine pores, comprising 0.01 to 2 parts by weight of sucrose based on 100 parts by weight of the polyurethane film.

6. The polyurethane film according to claim 5, comprising 0.01 to 1 part by weight of the sucrose.

7. The polyurethane film according to claim 5, further comprising anhydrous sodium sulfate and/or polyvinyl alcohol.

8. The polyurethane film according to claim 5, wherein the polyurethane film has a tear strength of 0.3 N to 3.0 N.

9. The polyurethane film according to claim 5, wherein the polyurethane film has a tensile force of 150 N/cm² to 700 N/cm².

10. The polyurethane film according to claim 5, wherein the polyurethane film has an elongation of 220% to 550%.

## Patentansprüche

1. Verfahren zur Herstellung einer Polyurethanfolie mit gleichförmigen feinen Poren, umfassend:
Herstellen einer Polyurethangemischlösung durch Mischen einer Polyurethanharzzusammensetzung und eines Zusatzstoffs, der Saccharose (C₁₂H₂₂O₁₁) enthält;
Entfernen der Bläschen durch Rühren der Polyurethangemischlösung;
Aufbringen der Polyurethangemischlösung, aus der die Bläschen entfernt wurden, auf ein Substrat;
Koagulation der auf das Substrat aufgebrachten Polyurethangemischlösung;
Entfernen des Zusatzstoffs in der koagulierten Polyurethangemischlösung; und
Trocknen der koagulierten Polyurethangemischlösung, aus der der Zusatzstoff entfernt wurde, wobei die Polyurethangemischlösung 1 bis 2.000 Gewichtsteile Saccharose (C₁₂H₂₂O₁₁) basierend auf 100 Gewichtsteilen Polyurethanharz beinhaltet,
der Querschnitt der Polyurethanfolie 30 bis 50 Poren mit einem Durchmesser von 10,00 µm bis 40,00 µm je 0,1 mm² beinhaltet,
die Polyurethanfolie 0,01 bis 2 Gewichtsteile Saccharose basierend auf 100 Gewichtsteilen Polyurethanfolie umfasst und die Polyurethanfolie eine scheinbare Dichte von 125 kg/m³ bis 220 kg/m³ aufweist.

2. Verfahren zur Herstellung einer Polyurethanfolie mit gleichförmigen feinen Poren nach Anspruch 1, wobei bei der Herstellung der Polyurethangemischlösung der Zusatzstoff ferner wasserfreies Natriumsulfat und/oder Polyvinylalkohol beinhaltet und das wasserfreie Natriumsulfat und/oder der Polyvinylalkohol in einer Menge von 1 bis 100 Gewichtsteilen basierend auf 100 Gewichtsteilen Polyurethanharz gemischt wird.

3. Verfahren zur Herstellung einer Polyurethanfolie mit gleichförmigen feinen Poren nach Anspruch 1, wobei beim Koagulieren der Polyurethangemischlösung die Polyurethangemischlösung durch Eintauchen in eine Koagulationslösung koaguliert wird, die 0,1 bis 30 Gew.-% eines organischen Lösungsmittels enthält, und die Temperatur der Koagulationslösung 30 °C bis 70 °C beträgt.

4. Verfahren zur Herstellung einer Polyurethanfolie mit gleichförmigen feinen Poren nach Anspruch 1, wobei beim Entfernen des Zusatzstoffs das mit der koagulierten Polyurethangemischlösung überzogene Substrat in ein Wasser mit einer Temperatur von 50 °C bis 100 °C eingetaucht wird, um Rückstände von organischem Lösungsmittel und Zusatzstoff zu entfernen.

5. Polyurethanfolie mit gleichförmigen feinen Poren, umfassend 0,01 bis 2 Gewichtsteile Saccharose basierend auf 100 Gewichtsteilen Polyurethanfolie.

6. Polyurethanfolie nach Anspruch 5, umfassend 0,01 bis 1 Gewichtsteile Saccharose.

7. Polyurethanfolie nach Anspruch 5, ferner umfassend wasserfreies Natriumsulfat und/oder Polyvinylalkohol.

8. Polyurethanfolie nach Anspruch 5, wobei die Polyurethanfolie eine Reißfestigkeit von 0,3 N bis 3,0 N aufweist.

9. Polyurethanfolie nach Anspruch 5, wobei die Polyurethanfolie eine Zugkraft von 150 N/cm² bis 700 N/cm² aufweist.

10. Polyurethanfolie nach Anspruch 5, wobei die Polyurethanfolie eine Dehnfähigkeit von 220 % bis 550 % aufweist.

## Revendications

1. Procédé permettant la préparation d'un film de polyuréthane possédant des pores fins uniformes, comprenant :
la préparation d'une solution de mélange de polyuréthane en mélangeant une composition de résine polyuréthane et un additif contenant du saccharose (C₁₂H₂₂O₁₁) ;
l'élimination de bulles en agitant la solution de mélange de polyuréthane ;
l'application, sur un substrat, de la solution de mélange de polyuréthane avec les bulles éliminées de celle-ci ;
la coagulation de la solution de mélange de polyuréthane appliquée sur le substrat ;
le retrait de l'additif dans la solution de mélange de polyuréthane coagulée ; et le séchage de la solution de mélange de polyuréthane coagulé avec l'additif enlevé de celle-ci, ladite solution de mélange de polyuréthane comprenant de 1 à 2000 parties en poids de saccharose (C₁₂H₂₂O₁₁) sur la base de 100 parties en poids de la résine polyuréthane, ladite section transversale du film de polyuréthane comprenant de 30 à 50 pores possédant un diamètre allant de 10,00 µm à 40,00 µm par 0,1 mm², ledit film de polyuréthane comprenant de 0,01 à 2 parties en poids de saccharose sur la base de 100 parties en poids du film de polyuréthane, et ledit film de polyuréthane possédant une masse volumique apparente allant de 125 kg/m³ à 220 kg/m³.

2. Procédé permettant la préparation d'un film de polyuréthane possédant des pores fins uniformes selon la revendication 1, lors de la préparation de la solution de mélange de polyuréthane, ledit additif comprenant en outre du sulfate de sodium anhydre et/ou un alcool polyvinylique et ledit sulfate de sodium anhydre et/ou ledit alcool polyvinylique étant mélangé en quantité de 1 à 100 parties en poids sur la base de 100 parties en poids de la résine polyuréthane.

3. Procédé permettant la préparation d'un film de polyuréthane possédant des pores fins uniformes selon la revendication 1, durant la coagulation de la solution de mélange de polyuréthane, ladite solution de mélange de polyuréthane étant coagulée en étant immergée dans une solution de coagulation contenant de 0,1 % à 30 % en poids d'un solvant organique et ladite température de la solution de coagulation étant de 30°C à 70°C.

4. Procédé permettant la préparation d'un film de polyuréthane possédant des pores fins uniformes selon la revendication 1, lors du retrait de l'additif, le substrat revêtu de la solution de mélange de polyuréthane coagulé étant immergé dans une eau d'une température de 50°C à 100°C afin d'enlever le solvant organique résiduel et l'additif.

5. Film de polyuréthane possédant des pores fins uniformes, comprenant de 0,01 à 2 parties en poids de saccharose sur la base de 100 parties en poids du film de polyuréthane.

6. Film de polyuréthane selon la revendication 5, comprenant de 0,01 à 1 partie en poids de saccharose.

7. Film polyuréthane selon la revendication 5, comprenant en outre du sulfate de sodium anhydre et/ou un alcool polyvinylique.

8. Film de polyuréthane selon la revendication 5, ledit film de polyuréthane possédant une résistance au déchirement allant de 0,3 N à 3,0 N.

9. Film de polyuréthane selon la revendication 5, ledit film de polyuréthane possédant une résistance à la traction allant de 150 N/cm² à 700 N/cm².

10. Film de polyuréthane selon la revendication 5, ledit film de polyuréthane possédant une élongation allant de 220 % à 550 %.
